# EUROPÄISCHE PATENTSCHRIFT

(11) **EP 2 869 143 B1**
(45) Veröffentlichungstag und Bekanntmachung des Hinweises auf die Patenterteilung: **11.09.2019**
(21) Anmeldenummer: 13190859.2
(22) Anmeldetag: 30.10.2013
(51) Int. Cl.: G05B 17/02

(54) **Emulationssystem zur Simulation eines technischen Systems**
Emulation system for simulating a technical system
Système d'émulation pour la simulation d'un système technique

(43) Veröffentlichungstag der Anmeldung: 06.05.2015
(73) Patentinhaber: Siemens Aktiengesellschaft, 80333 München (DE)
(72) Erfinder: Ermler, Rene, 91058 Erlangen (DE); Dallmann, Michael, 90530 Wendelstein (DE); Heider, Alexander, 91058 Erlangen (DE); Quiros Araya, Gustavo, 90459 Nürnberg (DE)

(56) Entgegenhaltungen:
- EP-A1- 2 337 004
- EP-A2- 2 648 103
- DE-A1-102009 030 842
- BRADU B ET AL: "A process and control simulator for large scale cryogenic plants", CONTROL ENGINEERING PRACTICE, PERGAMON PRESS, OXFORD, GB, Bd. 17, Nr. 12, 1. Dezember 2009 (2009-12-01), Seiten 1388-1397, XP026751208, ISSN: 0967-0661, DOI: 10.1016/J.CONENGPRAC.2009.07.003 [gefunden am 2009-08-14]

## Beschreibung

Die vorliegende Erfindung betrifft ein Emulationssystem zur Simulation eines technischen Systems, wobei das technische System zwei zusammenwirkende technische Komponenten umfasst und das Emulationssystem
- eine erste Simulations-Applikation zur Simulation einer ersten der technischen Komponenten und
- eine zweite Simulations-Applikation zur Simulation einer zweiten der technischen Komponenten umfasst, wobei
- die erste und die zweite Simulations-Applikation jeweils eine Kommunikationsschnittstelle zum Austausch von Nachrichten und/oder Informationen mit der jeweils anderen Simulations-Applikation aufweisen, und
- wobei das Emulationssystem weiterhin eine Kontroll-Applikation umfasst, welche zur Koordination der ersten und zweiten Simulations-Applikation ausgebildet und eingerichtet ist.

Derartige Emulationssysteme sind aus dem Stand der Technik bekannt. So offenbart beispielsweise der Artikel "A Process and Control Simulator for Large Scale Cryogenic Plants" (Control Engineering Practice 17, 12 (2009), Seite 1388 bis 1397) ein Simulationssystem zur Simulation eines von einer speicherprogrammierbaren Steuerung gesteuerten Kühlsystems. Dabei werden sowohl das Kühlsystem als auch die speicherprogrammierbare Steuerung von entsprechenden Emulatoren simuliert, wobei die Simulationen durch Verwendung einer gemeinsamen Simulations-Zeit gekoppelt sind. Weiterhin sind ähnliche Simulationssysteme bzw. Simulations-Applikationen aus der Europäischen Offenlegungsschrift EP 2337004 A1 oder der Deutschen Offenlegungsschrift DE 102009030842 A1 bekannt.

Ein anderes Beispiel des Standes der Technik ist in EP 2648103 A2 zu finden. Ausgehend vom Stand der Technik ist es eine Aufgabe der vorliegenden Erfindung, Emulations-Systeme mit mehreren Simulations-Applikationen besser kontrollieren zu können.

Diese Aufgabe wird gelöst von einem Emulations-System mit den Merkmalen des Patentanspruchs 1 sowie einem Verfahren gemäß dem unabhängigen Verfahrensanspruch.

Ein derartiges Emulationssystem ist zur Simulation eines technischen Systems geeignet, insbesondere eingerichtet und ausgebildet, wobei das technische System mindestens zwei zusammenwirkende technische Komponenten umfasst. Das Emulationssystem umfasst dabei eine erste Simulations-Applikation zur Simulation einer ersten der technischen Komponenten sowie eine zweite Simulations-Applikation zur Simulation einer zweiten der technischen Komponenten, wobei die erste und die zweite Simulations-Applikation jeweils eine Kommunikationsschnittstelle zum Austausch von Nachrichten und/oder Informationen mit der jeweils anderen Simulations-Applikation aufweist. Das Emulations-System umfasst weiterhin eine KontrollApplikation, welche zur Koordination der ersten und zweiten Simulations-Applikation ausgebildet und eingerichtet ist, sowie eine Monitoring-Applikation. Dabei hat die Monitoring-Applikation einen Zugriff auf Simulations-Daten der ersten Simulations-Applikation und ist zur Übermittlung eines ersten Monitoring-Ergebnisses an die Kontroll-Applikation ausgebildet und eingerichtet. Die Kontroll-Applikation ist dann weiterhin zur Auswertung des ersten Monitoring-Ergebnisses ausgebildet und eingerichtet.

Durch die Monitoring-Applikation ist das Emulations-System in der Lage, beispielsweise den Ablauf der ersten Simulations-Applikation zu begleiten und/oder zu überwachen und entsprechende Ergebnisse an die Kontroll-Applikation zu übertragen. Über die Auswertung der ersten Monitoring-Ergebnisse ist die Kontroll-Applikation dann wiederum in der Lage, beispielsweise ggf. Nachrichten bzw. Informationen auszugeben oder auch beispielsweise den Simulations-Ablauf zu beeinflussen, zu ändern oder zu stoppen. Auf diese Weise lässt sich eine verbesserte Kontrolle des Emulations-Systems erreichen.

In einer vorteilhaften Ausgestaltung umfasst das technische System mindestens zwei zusammenwirkende technische Komponenten. Dabei kann das Emulations-System derart ausgebildet sein, dass bei mehr als zwei zusammenwirkenden technischen Komponenten nur zweien davon eine Simulations-Applikation zugeordnet sind, während die anderen real ablaufen. Es kann auch mehr als zwei technischen Komponenten eine Simulations-Applikation zugeordnet sein und dann entsprechend weniger technische Komponenten real ablaufen. Weiterhin kann auch allen technischen Komponenten jeweils eine Simulations-Applikation gemäß der vorliegenden Beschreibung zugeordnet sein. Die Ausbildung der Monitoring-Applikation bzw. Kontroll-Applikation können dann der vorliegenden Beschreibung entsprechend ausgebildet und eingerichtet sein.

Die zusammenwirkenden technischen Komponenten können dabei beispielsweise mechanisch, elektronisch, kommunikativ, über eine gemeinsame Steuerung und/oder ähnliche vergleichbare technische Mittel gekoppelt sein. Dabei bedeutet ein technisches Zusammenwirken der Komponenten, dass die Komponenten beispielsweise zum Erreichen einer Wirkung und/oder zum Erfüllen einer Aufgabe des technischen Systems zusammenwirken.

Technische Komponenten können beispielsweise ein Steuerungsgerät, ein Modul für ein Steuerungsgerät, eine speicherprogrammierbare Steuerung, insbesondere eine modulare speicherprogrammierbare Steuerung, eine Anlage, eine Teilanlage, ein Gerät, eine Maschine, ein Motor, ein Antrieb, ein Roboter oder vergleichbare technische Anlagen oder Einrichtungen sein.

Eine Simulations-Applikation kann beispielsweise als Software-Applikation ausgebildet und eingerichtet sein. Eine derartige Simulations-Applikation kann weiterhin beispielsweise als SPS-Emulator, eine Prozess-Simulation, eine Antriebs-Simulation, eine Motor-Simulation, eine Roboter-Simulation, eine Maschinen-Simulation und/oder ähnliche Simulations-Applikationen ausgebildet und eingerichtet sein.

Simulations-Applikationen können beispielsweise auf einer Datenverarbeitungseinrichtung wie z. B. einem Computer, einem Laptop, einem Tablet-Computer, einem Smartphone oder vergleichbaren fest installierten oder tragbaren Datenverarbeitungseinrichtungen installiert sein. Dabei kann die zweite Simulations-Applikation beispielsweise auf der gleichen Datenverarbeitungseinrichtung wie die erste Simulations-Applikation installiert sein. Weiterhin kann die zweite Simulations-Applikation auch auf einer anderen Datenverarbeitungseinrichtung als die erste Simulations-Applikation installiert sein, wobei in diesem Fall beide Datenverarbeitungseinrichtungen beispielsweise über entsprechende Kommunikationsmittel verbunden sein können oder müssen.

Dabei sind die erste und die zweite Simulations-Applikation derart ausgebildet und eingerichtet sowie auf entsprechenden Datenverarbeitungseinrichtungen bzw. ein entsprechender Datenverarbeitungseinrichtung installiert, dass sie gemeinsam eine Aufgabe lösen und ggf. dazu Nachrichten über entsprechende Kommunikationsmittel bzw. Kommunikationsverbindungen austauschen können bzw. austauschen. So können beispielsweise die erste und die zweite Simulations-Applikation einen aus mehreren technischen Komponenten bestehenden Prozessablauf simulieren, wobei verschiedenen Komponenten der Anlage verschiedene der Simulationen zugeordnet sind.

Weiterhin können beispielsweise auch automatisierte Anlagen mittels der ersten und zweiten Simulations-Applikation derart emuliert werden, dass beispielsweise eine der Simulations-Applikationen eine Emulation der technischen Anlage vornimmt, während die andere Simulations-Applikation beispielsweise eine Steuerung für diese Anlage emuliert. Auf diese Weise können beispielsweise auch zwei oder mehrere Simulations-Applikationen verschiedene aus mehreren Komponenten bzw. Anlagen oder Steuerungs-Teilen bestehende Systeme über eine entsprechende Kopplung von zugeordneten Simulations-Applikationen emuliert werden. Solche Simulations-Applikationen können beispielsweise als Emulation eines Automatisierungssystems, einer Steuerung und/oder Prozess-Simulationen, Antriebs-Simulationen und/oder ähnlichen Systemen ausgebildet und eingerichtet sein.

Die Kontroll-Applikation kann als eine Software-Applikation eingerichtet und ausgebildet sein und auf einer Datenverarbeitungseinrichtung installiert werden. Dabei kann die Kontroll-Applikation beispielsweise auf derselben Datenverarbeitungseinrichtung wie die erste und/oder zweite Simulations-Applikation installiert sein, aber auch auf einer davon gesonderten Datenverarbeitungseinrichtung.

Die Kontroll-Applikation kann beispielsweise derart ausgebildet und eingerichtet sein, dass sie die Ausführung der Emulatoren, der Simulations-Applikationen und/oder des Emulations-Systems koordiniert. Insbesondere ist die Kontroll-Applikation derart ausgebildet und eingerichtet, dass sie die Ausführung der Emulatoren, der Simulations-Applikationen und/oder des Emulations-Systems koordinieren kann bzw. koordiniert.

Die Koordination der ersten und zweiten Simulations-Applikation durch die Kontroll-Applikation kann beispielsweise ein Starten, Stoppen und/oder Vorgeben von Bedingungen und/oder Parametern bzw. ein Einrichten und/oder Kontrollieren der Simulationen umfassen. Insbesondere kann die Koordination derartige Tätigkeiten mit Bezug auf eine der Simulations-Applikationen abhängig von der anderen der Simulationen umfassen.

Die Koordination der ersten und zweiten Simulations-Applikation kann beispielsweise eine Uhrensynchronisation bzw. eine Synchronisation und/oder ein Setzen bzw. Überwachen einer Simulationszeit umfassen, insbesondere einer gemeinsamen Simulationszeit. Eine solche Uhrensynchronisation bzw. Zeitsynchronisation der Simulations-Applikationen kann beispielsweise durch Vergabe von Zeitstempeln und/oder Zeitscheiben an eine bzw. beide der Simulations-Applikationen erfolgen bzw. eine solche Vergabe umfassen. Solche Zeitstempel und/oder Zeitscheiben, mit welchen bzw. innerhalb welcher die Simulations-Applikationen ablaufen, können beispielsweise derart erfolgen, dass eine feste Abfolge von Zeitstempeln und/oder Zeitscheiben von der Kontroll-Applikation an die Simulations-Applikationen ausgegeben werden oder auch eine dynamische Abfolge von Zeitstempeln oder Zeitscheiben.

Eine derartige Zeitscheiben-Steuerung kann beispielsweise so ausgestaltet sein, dass nach Vorgabe einer bestimmten Zeitscheibe eine Simulations-Applikation diese Simulations-Applikation genau am Beginn der Zeitscheibe startet, sie dann gemäß der Länge der Zeitscheibe abläuft und dann wieder gestoppt wird. Dabei kann die Zeit einer Echtzeit entsprechen oder auch einer von der Echtzeit abweichenden Simulations-zeit. Eine solche von der Echtzeit abweichende Simulations-zeit kann beispielsweise schneller als die Echtzeit verlaufen kann (eine Art Zeitraffer) oder auch langsamer (eine Art Zeitlupe) oder auch variabel in Bezug auf den Verlauf der Echtzeit.

Nach dem Ablauf einer Zeitscheibe gibt die Simulations-Applikation dann beispielsweise die Kontrolle der Simulation zurück an die Kontrollapplikation, die dann die nächstfolgende Zeitscheibe an die Simulations-Applikationen ausgeben kann, nachdem die Zeitscheiben aller parallel ablaufender Simulations-Applikationen des Emulationssystems abgelaufen sind. So können die Simulations-Applikationen durch die Kontrollapplikation beispielsweise koordiniert ablaufen, so dass Ergebnisse und Zustände einer Simulations-Applikation von einer anderen Simulations-Applikation verwendet werden können. Auf diese Weise lassen sich technische Systeme mit zusammenwirkenden technischen Komponenten durch das Emulations-System vorteilhaft simulieren.

Die Monitoring-Applikation kann beispielsweise zur Überwachung der ersten Simulations-Applikation ausgebildet und eingerichtet sein. Dabei kann der Zugriff der Monitoring-Applikation auf die Simulationsdaten ein lesender Zugriff, ein schreibender Zugriff und/oder ein Schreib-Lese-Zugriff sein. Zur Überwachung der ersten Simulations-Applikation genügt im Allgemeinen ein rein lesender Zugriff auf die Simulationsdaten, während durch beispielsweise einen Schreib-Lese-Zugriff die Monitoring-Applikation auch Einfluss auf die erste Simulations-Applikation nehmen kann.

Simulationsdaten können beispielsweise für die simulierte Komponente bzw. das simulierte System oder Gerät charakteristische und/oder zur Simulation verwendete und/oder notwendige Daten sein oder umfassen. Solche Simulationsdaten können beispielsweise als so genanntes "Prozess-Abbild" des simulierten Systems bzw. der simulierten Komponente bezeichnete Daten sein oder solche umfassen. Dabei kann das "Prozess-Abbild" beispielsweise die Gesamtheit aller Eingangs- und Ausgangs-Daten einer Simulation oder Emulation umfassen oder daraus bestehen. Weiterhin können Simulationsdaten aber auch weitere innerhalb einer Simulations-Applikation verwendete oder vorhandene Daten wie beispielsweise temporäre und sonstigen internen Variablen, interne Zustandsvariablen, Ereignisvariablen, Systemvariablen, Flags oder jede Art vergleichbarer Daten sein bzw. solche umfassen.

Das erste Monitoring-Ergebnis kann beispielsweise das Ergebnis der Arbeit der Monitoring-Applikation bezüglich einer Überwachung der ersten Simulations-Applikation sein. Ein derartiges Monitoring-Ergebnis kann beispielsweise ein oder mehrere Simulationsdaten der ersten Simulations-Applikation darstellen bzw. umfassen oder auch eine Auswertung von entsprechenden Simulationsdaten der ersten Simulations-Applikation umfassen bzw. aus einer solchen bestehen. Beispielsweise kann ein Monitoring-Ergebnis auch Daten (z.B. ein Flag o.ä.) bezüglich der Vorliegens eines vorgegebenen oder vorgebbaren Zustands umfassen bzw. aus solchen Daten bestehen.

So kann beispielsweise im Rahmen der Monitoring-Applikation ein Prüfkriterium bezüglich der ersten Simulations-Applikation vorgesehen sein. In diesem Fall kann das erste Monitoring-Ergebnis beispielsweise das Ergebnis einer solchen Prüfung (z. B. Prüfkriterium liegt vor oder Prüfkriterium liegt nicht vor) sein bzw. umfassen. Ein derartiges Monitoring-Ergebnis kann beispielsweise als so genanntes "Flag" ausgebildet sein. Weiterhin kann ein Monitoring-Ergebnis bestimmte Datenwerte, Messwerte, Steuerwerte, Kenngrößen (z. B. so genannte "Tags", Inhalte einer oder mehrerer Variablen) sowie ggf. Datenwerte, die ein bestimmtes Prüfkriterium erfüllen, umfassen bzw. aus einzelnen oder auch allen der genannten Kategorien bzw. Werte bestehen.

Die Monitoring-Applikation kann beispielsweise gleichwertig in die Abarbeitung des Emulations-Systems integriert sein. Dabei werden bei der Ausführung der Monitoring-Applikation beispielsweise bestimmte Bedingungen geprüft. Die Monitoring-Applikation kann dabei beispielsweise jeweils nachgelagert zu einer entsprechenden Ausführung der entsprechenden Simulations-Applikationen ausgeführt werden. Dies kann beispielsweise jeweils nach dem Ende der Bearbeitung einer Zeitscheibe durch die Simulations-Applikation oder zu bestimmten vorgegebenen oder vorgebbaren Zeitpunkt im Ablauf der Simulationen bzw. des Emulationssystems erfolgen.

In einer vorteilhaften Ausgestaltung der Erfindung hat die Monitoring-Applikation oder eine weitere Monitoring-Applikation des Emulations-Systems einen Zugriff auf Simulationsdaten der zweiten Simulations-Applikation, wobei die Monitoring-Applikation bzw. die weitere Monitoring-Applikation zur Übermittlung eines zweiten Monitoring-Ergebnisses an die Kontroll-Applikation ausgebildet und eingerichtet ist. Die Kontroll-Applikation ist in dieser vorteilhaften Ausgestaltung zur Auswertung auch des zweiten Monitoring-Ergebnisses ausgebildet und eingerichtet.

Auf diese Weise kann entsprechend der vorstehend beschriebenen Überwachung der ersten Simulations-Applikation auch die zweite Simulations-Applikation überwacht werden. Dies kann, wie beschrieben, beispielsweise ebenfalls durch die Monitoring-Applikation erfolgen. Alternativ dazu kann eine weitere Monitoring-Applikation vorgesehen sein, welche zur Überwachung der zweiten Simulations-Applikation ausgebildet und eingerichtet ist. Dabei kann die weitere Monitoring-Applikation bzw. die Monitoring-Applikation bezüglich der zweiten Simulations-Applikation entsprechend der vorstehend beschriebenen Monitoring-Applikation in Bezug auf die erste Simulations-Applikation ausgebildet und eingerichtet sein. Das zweite Monitoring-Ergebnis kann ebenfalls entsprechend des in der vorliegenden Beschreibung erläuterten ersten Monitoring-Ergebnisses ausgestaltet sein. Auch die Auswertung des zweiten Monitoring-Ergebnisses kann entsprechend der in der vorliegenden Beschreibung dargestellten Auswertung des ersten Monitoring-Ergebnisses durch die Kontroll-Applikation ausgebildet und eingerichtet sein.

Die Kontroll-Applikation kann beispielsweise im Rahmen der Auswertung des ersten und/oder des zweiten Monitoring-Ergebnisses zur Prüfung auf das Vorliegen eines Prüfzustands ausgebildet und eingerichtet sein. Ein Prüfzustand kann beispielsweise durch das Vorliegen bestimmter Werte oder logischer Zustände von einer oder mehreren Simulationsdaten definiert und/oder eingerichtet sein. Dabei kann ein Prüfzustand beispielsweise vorliegen, wenn eine bestimmte logische Verknüpfung von einem oder mehreren Werten oder logischen Zuständen vorliegt bzw. die vorliegenden Werte größer oder kleiner als entsprechend vorgegebene Werte sind.

Inhaltlich kann ein Prüfzustand beispielsweise charakteristischen, kritischen, gefährlichen und/oder ähnlichen Werten bzw. Zuständen des simulierten technischen Systems oder einer technischen Komponente entsprechen. Weiterhin kann ein Prüfzustand auch durch das Vorliegen technisch plausibler bzw. nicht-plausibler Werte charakterisiert sein.

In einer vorteilhaften Ausgestaltung der Erfindung kann weiterhin vorgesehen sein, dass das Emulations-System derart ausgebildet und eingerichtet ist, dass eine Aktivität ausgelöst wird, wenn die Kontroll-Applikation das Vorliegen eines Prüfzustands feststellt, insbesondere wenn die Kontroll-Applikation das Vorliegen eines bestimmten Prüfzustands erstmalig bzw. erstmalig für eine vorgegebene oder vorgebbare Zeitdauer feststellt. Derartige Aktivitäten können beispielsweise als Warnmeldungen, ein Stoppen einer, mehrerer oder aller Simulations-Applikationen bzw. des Emulations-Systems, eine Änderung von Simulations-Parametern, eine Änderung der Simulationszeit, von Zeitscheiben des Simulationsablaufs oder als ähnliche Aktivitäten ausgestaltet sein bzw. solche Maßnahmen umfassen.

Weiterhin kann vorgesehen sein, dass die Kontroll-Applikation derart ausgebildet und eingerichtet ist, dass sie ein Anhalten der ersten und zweiten Simulations-Applikation veranlasst, wenn die Auswertung des ersten und/oder des zweiten Monitoring-Ergebnisses das Vorliegen des Prüfzustands ergibt, insbesondere das erstmalige Vorliegen des Prüfzustands ergibt.

Mit einem derart ausgestalteten Emulations-System kann beispielsweise vorteilhaft eine Überwachung des Emulations-Systems bzw. die Untersuchung deines emulierten Systems auf beispielsweise kritische, gefährliche oder auch sonst charakteristische Zustände hin erfolgen. So kann das Emulations-System beispielsweise derart ausgestaltet und eingerichtet sein, dass der Prüfzustand einem entsprechenden charakteristischen Zustand, beispielsweise einem der oben genannten Zustände, entspricht und die Simulation, z. B. die erste und zweite Simulations-Applikation, angehalten wird, sobald der Prüfzustand vorliegt insbesondere erstmalig vorliegt oder auch für eine charakteristische Zeit vorliegt.

Das Anhalten der Simulation bzw. der ersten und zweiten Simulations-Applikation kann beispielsweise durch das Ausgeben eines "Stopp"-Befehls, ein Anhalten der bzw. einer Simulationszeit oder auch dadurch erreicht werden, dass keine weiteren Zeitscheiben mehr ausgegeben werden, insbesondere keine Zeitscheiben mehr an die Simulations-Applikationen ausgegeben werden.

Weiterhin kann vorgesehen sein, dass vor oder nach dem Anhalten der ersten und zweiten Simulations-Applikation eine entsprechende Meldung an einen Benutzer ausgegeben wird und/oder beispielsweise die Kontrolle des Emulations-Systems oder der ersten und/oder der zweiten Simulations-Applikation nach dem Stoppen zumindest teilweise auf einen manuellen Betrieb durch einen Benutzer, einen Einzelschritt-Betrieb oder die Kontrolle durch eine weitere gesonderte Applikation übertragen wird.

Die vorstehend genannte Aufgabe wird auch gelöst durch ein Verfahren zur Simulation eines zwei zusammenwirkende Komponenten umfassenden technischen Systems mittels eines Emulations-Systems gemäß der vorliegenden Beschreibung, wobei das Verfahren die folgenden Schritte umfasst:
a) Ablauf der ersten und zweiten Simulations-Applikation für einen vorgegebenen oder vorgebbaren Zeitraum;
b) Überwachen der ersten Simulations-Applikation durch die Monitoring-Applikation;
c) Übermitteln eines ersten Monitoring-Ergebnisses bezüglich der Überwachung der ersten Simulations-Applikation an die Kontroll-Applikation;
d) Auswerten des ersten Monitoring-Ergebnisses durch die Kontroll-Applikation.

Durch die Möglichkeit der Überwachung der ersten Simulations-Applikation durch die Monitoring-Applikation sowie das Übermitteln des Monitoring-Ergebnisses an die Kontroll-Applikation und die dortige Auswertung dieses Ergebnisses bietet das beschriebene Verfahren eine verbesserte Möglichkeit zur Kontrolle und Überwachung des Emulations-Systems. So ist es beispielsweise auf diese Weise möglich, den Ablauf des Emulations-Systems auf das Vorliegen ganz bestimmter Monitoring-Ergebnisse hin zu überwachen, um dann beispielsweise nach einer entsprechenden Auswertung z. B. eine bestimmte Aktion wie beispielsweise das Anhalten der Simulation, die Ausgabe einer Meldung an einen Benutzer, das Einstellen eines bestimmten Ablauf-Modus der Simulation und/oder ähnliche Aktionen auszulösen.

Ein Zeitraum kann beispielsweise ein Zeitraum in einer simulations-internen Zeit sein. Der Zeitraum kann beispielsweise zeitlich fest vorgegeben oder auch an eine bestimmte End-Bedingung geknüpft sein. Weiterhin kann vorgegeben sein, dass der Zeitraum beispielsweise einmal abläuft oder auch mehrfach wiederholt abläuft.

Der Zeitraum kann beispielsweise derart bemessen sein, dass er auf beispielsweise die Auswertungen des Monitoring-Ergebnisses derart abgestimmt ist, dass das Monitoring-Ergebnis prinzipiell feststellbar ist. So kann beispielsweise der Zeitraum bei nur relativ kurzzeitig auftretenden gesuchten Zuständen entsprechend klein gewählt werden, beispielsweise entsprechend einer typischen Zeit, während der ein solcher gesuchtes Zustand auftritt. Für längere Zeit auftretende Zustände kann dann beispielsweise ein entsprechend längerer Zeitraum gewählt werden.

Die Überwachung der ersten Simulations-Applikation kann beispielsweise durch Zugriff und Beobachtung von einem oder mehreren Simulationsdaten oder auch weiteren Daten und/oder Parametern der Simulationsapplikation erfolgen.

Das Monitoring-Ergebnis kann beispielsweise eine logische Aussage darüber, ob ein bestimmtes Monitoring-Ergebnis vorliegt oder nicht (z. B. eine Aussage entsprechend: "Ereignis XYZ liegt vor" oder "Ereignis XYZ liegt nicht vor"), umfassen bzw. aus einer solchen bestehen. Weiterhin kann die Übermittlung des Monitoring-Ergebnisses auch konkrete Simulationsdaten oder auch sonstige Daten im Zusammenhang mit der ersten Simulations-Applikation umfassen bzw. aus solchen bestehen.

Die Auswertung des ersten Monitoring-Ergebnisses kann beispielsweise einen Vergleich mit vorgegebenen Bedingungen, Parametern oder einen Abgleich, Vergleich und/oder eine Koordination mit weiteren Prüfungsergebnissen, beispielsweise durch andere Simulations-Applikationen, umfassen. Weiterhin kann die Auswertung auch einen Abgleich, Vergleich und/oder eine Koordination mit sonstigen Daten und Fakten wie beispielsweise bestimmten Zeiten, Zeitpunkten, Tageszeiten, Ablaufzeiten oder auch weiterer Daten und Fakten umfassen. Das Auswerten des ersten Monitoring-Ergebnisses kann beispielsweise auch die Überprüfung auf das Vorliegen eines bestimmten Monitoring-Ergebnisses umfassen oder aus einer solchen bestehen (z. B. Überprüfung auf ein "Ereignis XYZ liegt vor" - Ergebnis).

In einer vorteilhaften Ausgestaltung umfasst das Verfahren nachfolgend Verfahrensschritt b) den folgenden Verfahrensschritt:
b1) Prüfen einer Ereignis-Bedingung bezüglich der ersten Simulations-Applikation durch die Monitoring-Applikation und Durchführung von Verfahrensschritt c) nur, wenn die Ereignis-Bedingung erfüllt ist.

Auf diese Weise lässt sich die Emulations-Applikation noch effizienter kontrollieren und koordinieren, da bereits eine gewisse Vorauswahl und Vorprüfung vor dem Übertragen eines Monitoring-Ergebnisses an die Kontroll-Applikation erfolgt. Auf diese Weise kann die Kontroll-Applikation ggf. entlastet werden und so der Ablauf effizienter überwacht und koordiniert.

Vorteilhafterweise kann der Verfahrensschritt b1) nach Verfahrensschritt b) und vor Verfahrensschritt c) ausgeführt werden.

Das Prüfen einer Ereignis-Bedingung kann beispielsweise das Auslesen eines relevanten Simulationsdatums bzw. relevanter Simulationsdaten und/oder das Abprüfen einer bestimmten Übertragungsbedingung umfassen. Die Übertragungs-Bedingung kann auch weitere logische Schritte bzw. das Prüfen weiterer Daten oder Bedingungen, wie beispielsweise den internen Zustand der Simulations-Applikation, umfassen.

Weiterhin kann vorgesehen sein, dass auch Verfahrensschritt d) nur dann erfolgt, wenn die Ereignis-Bedingung erfüllt ist. Es kann alternativ auch vorgesehen sein, dass Verfahrensschritt d) auch dann ausgeführt wird, auch wenn die Ereignis-Bedingung nicht erfüllt ist. So können im letztgenannten Fall beispielsweise alte Monitoring-Ergebnisse ausgewertet werden, solange noch keine neuen Ergebnisse an die Kontroll-Applikation übertragen werden.

In einer vorteilhaften Ausgestaltung des Verfahrens kann vorgesehen sein,
dass in Verfahrensschritt b) die Monitoring-Applikation oder eine weitere Monitoring-Applikation auch die zweite Simulations-Applikation überwacht,
dass im Verfahrensschritt c) auch zweite Monitoring-Ergebnisse bezüglich der Überwachung der zweiten Simulations-Applikation an die Kontroll-Applikation übermittelt werden und
dass im Verfahrensschritt d) die Kontroll-Applikation das erste und/oder zweite Monitoring-Ergebnis auswertet.

Auf diese Weise erhält man eine weiter verbesserte Kontrolle des Emulations-Systems, da beide Simulations-Applikationen überwacht werden können und sowohl auf bestimmte Zustände jeder einzelnen Simulations-Applikation als auch auf gekoppelte Zustände beider Applikationen reagiert werden kann. Somit lässt sich die Überwachung des Emulations-Systems weiter verfeinern und verbessern.

Dabei können auch die zweiten Monitoring-Ergebnisse, die Monitoring-Applikation oder die weitere Monitoring-Applikation oder auch die Kontroll-Applikation gemäß der vorliegenden Beschreibung weiter ausgestaltet sein.

In einem weiteren Verfahrensschritt b1) kann die Monitoring-Applikation oder die weitere Monitoring-Applikation eine weitere Ereignis-Bedingung bezüglich der zweiten Simulations-Applikation prüfen und die Übermittlung der zweiten Monitoring-Ergebnisse gemäß Verfahrensschritt c) nur erfolgen lassen, wenn die weitere Ereignis-Bedingung erfüllt ist.

Hierbei wird die vorstehend bereits erläuterte Vorgehensweise einer gewissen "Vorprüfung" in der Monitoring-Applikation auch auf das Monitoring der zweiten Simulations-Applikation übertragen und so die Kontrolle bzw. Überwachung des Emulations-Systems weiter verbessert und verfeinert.

Zudem kann die Auswertung gemäß Verfahrensschritt d) eine Prüfung auf das Vorliegen eines Prüfzustands umfassen. Dabei kann zudem vorgesehen sein, dass die Kontroll-Applikation ein Anhalten der ersten und zweiten Simulations-Applikation veranlasst, wenn die Auswertung gemäß Verfahrensschritt d) das Vorliegen dieses Prüfungszustandes ergibt.

Dabei können der Prüfzustands bzw. die Auswertung des Prüfzustandes und die entsprechend daraus abgeleiteten Konsequenzen gemäß der vorliegenden Beschreibung ausgebildet sein.

Weitere vorteilhafte Ausgestaltungen ergeben sich aus den Unteransprüchen.

Im Folgenden wird die vorliegende Erfindung mit Bezug auf die beiliegenden Figuren beispielhaft näher erläutert.

Es zeigen:
- Figur 1: Ein Emulations-System für einen über eine speicherprogrammmierbare Steuerung gesteuerten Prozess-Ablauf;
- Figur 2: einen beispielhaften Ablauf einer Überwachung durch das Emulations-Systems gemäß Figur 1;
- Figur 3: Beispiel für einen Überwachungsablauf eines erweiterten Emulations-Systems gemäß Figur 1.

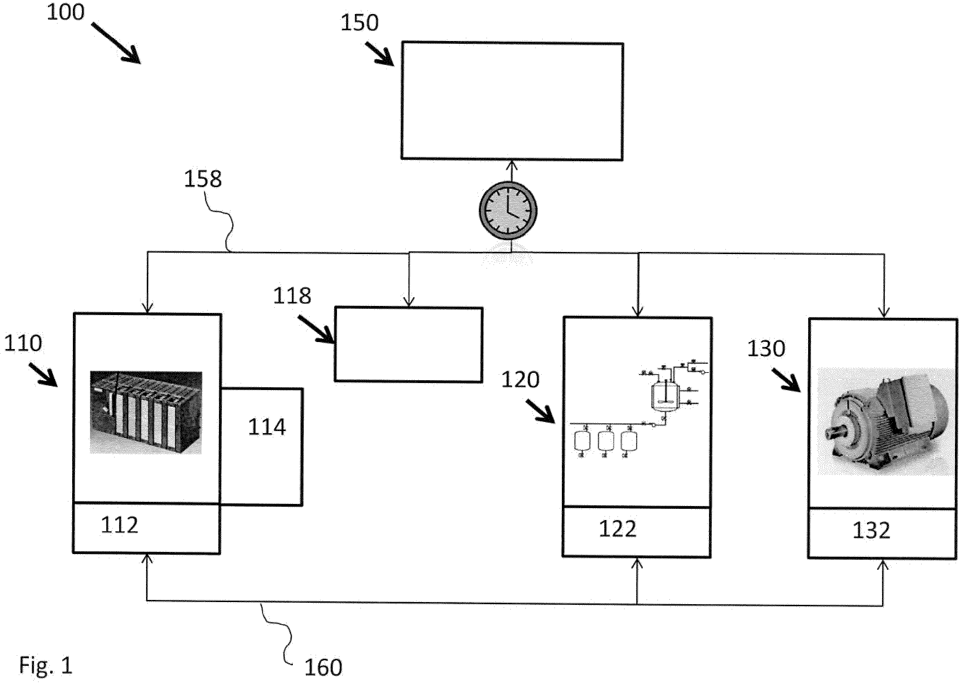

Figur 1 zeigt ein Emulations-System 100 mit einer Simulation 110 für eine speicherprogrammierbare Steuerung ("PLC-Simulation" 110), einer Prozess-Simulation 120 sowie einer Antriebs-Simulation 130, wobei die PLC-Simulation 110, die Prozess-Simulation 120 sowie die Antriebs-Simulation 130 derart über eine Kommunikations-Verbindung 160 gekoppelt sind, dass eine SPS-Steuerung des Prozesses sowie des Antriebs simuliert wird.

Zur Kommunikation umfasst die PLC-Simulation 110 eine Kommunikations-Schnittstelle 112, die Prozess-Simulation 120 umfasst dafür eine Kommunikations-Schnittstelle 122 und die Antriebs-Simulation 130 eine Kommunikations-Schnittstelle 132. Über die Kommunikations-Schnittstelle 112, 122, 132 sowie die Kommunikations-Verbindung 160 können entsprechende Simulationsdaten zwischen den Simulationen 110, 120, 130 übertragen werden und so das gesamte System gesteuert und simuliert werden.

Die PLC-Simulation 110 umfasst weiterhin ein so genanntes Prozess-Abbild 114, in welchem alle Variablen, welche durch ein Applikations-Programm innerhalb der PLC-Simulation 110 benötigt werden, abgespeichert sind. Dies sind sowohl die Eingangs-Daten, welche die PLC-Simulation für die Steuerung benötigt (also z. B. entsprechende Zustands-Variablen der Prozess-Simulation 120 oder auch charakteristische Antriebsdaten der Antriebs-Simulation 130) sowie die Ausgangs-Daten, die zur Steuerung an die Prozess-Simulation 120 bzw. die Antriebs-Simulation 130 über die Kommunikationsmittel 160 ausgegeben werden.

Die Kommunikationsverbindung 160 kann dabei als rein logische Kommunikationsverbindung zwischen den Simulations-Applikationen 110, 120, 130 ausgebildet sein, beispielsweise für Applikationen, die auf einer Rechnereinheit installiert sind. Sie kann allerdings auch als physikalische Datenverbindung ausgebildet sein, beispielsweise wenn zumindest zwei der Simulations-Applikationen 110, 120, 130 auf verschiedenen Rechnereinheiten installiert sind.

Weiterhin ist im Emulations-System eine Kontroll-Applikation 150 vorgesehen, mit welcher die Zeitsteuerung (durch eine Uhr unterhalb der Kontroll-Applikation 150 symbolisiert) und allgemein die Koordination der einzelnen Simulationen 110, 120, 130 vorgenommen wird. Dazu steuert die Kontroll-Applikation unter anderem den Ablauf einer Simulationszeit, die für den Ablauf der einzelnen Simulationen 110, 120, 130 maßgeblich ist.

Die Steuerung der Simulationen 110, 120, 130 erfolgt beispielsweise über die Vergabe von Zeitscheiben durch die Kontroll-Applikation 150. Nach Übermittlung einer bestimmten Zeitscheibe an die einzelnen Simulationen 110, 120, 130 beginnt jede dieser Simulationen 110, 120, 130 mit der Simulation des entsprechenden Systems, d. h. der PLC, des Prozesses oder des Antriebs, beginnend mit der Anfangszeit der entsprechenden Zeitscheibe. Die Simulation wird dann jeweils so weit berechnet, bis die entsprechende interne Zeit die Endzeit der vorgegebenen Zeitscheibe erreicht oder es werden z.B. bei der Simulation der PLC diejenigen Aufgaben durchgeführt, die innerhalb der Zeitscheibe in der realen PLC auszuführen wären. Dann wird die Kontrolle des Simulations-Systems jeweils wieder von der jeweiligen Simulations-Applikation 110, 120, 130 an die Kontroll-Applikation 150 zurückgegeben. Die Kontroll-Applikation wartet dann ab, bis alle Simulationen 110, 120, 130 die Abarbeitung der entsprechenden Zeitscheibe beendet haben und vergibt dann z.B. eine neue Zeitscheibe an diese Simulationen 110, 120, 130.

Die ganze Zeitsteuerung verläuft dabei über eine weitere Kommunikations-Verbindung 158 zwischen der Kontroll-Applikation 150 und den Simulations-Applikationen. Dabei kann, genau wie die Kommunikations-Verbindung 160, auch die weitere Kommunikationsverbindung 158 als eine logische Kommunikations-Verbindung und/oder eine physikalische oder auch eine Kombination aus beidem ausgebildet sein.

Das Emulations-System umfasst weiterhin eine Monitoring-Applikation 118 für die PLC-Simulation 110, insbesondere zur Überwachung des Prozess-Abbildes 114 der PLC-Simulation 110. Dabei ist die Monitoring-Applikation 118 über die weitere Kommunikationsverbindung 158 mit der Kontroll-Applikation 150 verbunden und kann Daten, beispielsweise Monitoring-Ergebnisse oder Ähnliches, an die Kontroll-Applikation 150 senden und/oder auch entsprechende Befehle, beispielsweise Zeitscheiben oder andere Befehle von der Kontroll-Applikation 150 empfangen.

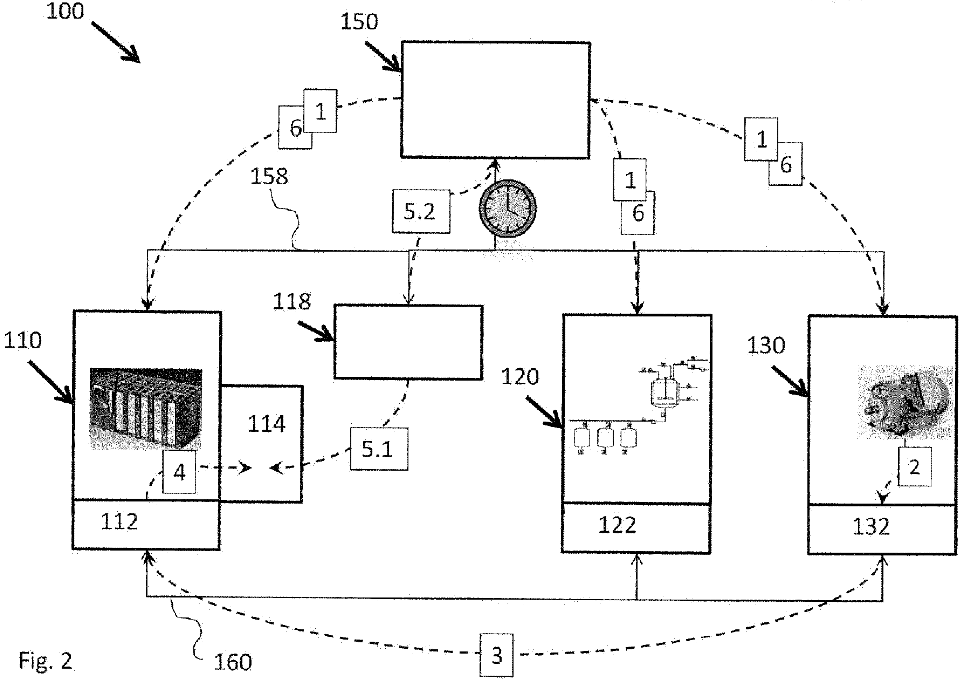

Figur 2 zeigt einen Ablauf während einer Überwachung des Emulations-Systems 100 durch die Monitoring-Komponente 118. Dabei gibt die Kontroll-Applikation 150 in einem Schritt (1) eine Zeitscheibe an jede der Simulations-Applikationen 110, 120, 130, wobei dann die jeweiligen Applikationen 110, 120, 130 die Simulation im Rahmen dieser Zeitscheibe ablaufen lassen. In einem weiteren Schritt (2) wird ein im virtuellen Antrieb 130 auftretendes Ereignis an die Kommunikations-Schnittstelle 132 der Antriebs-Simulation 130 und in einem Schritt (3) über die Kommunikationsverbindung 160 an die Kommunikations-Schnittstelle der PLC-Simulation übertragen. In einem Verfahrensschritt (4) wird dann dieses Ereignis im Prozess-Abbild 114 der PLC-Simulation 110 gespeichert.

Nach dem Ablauf der Zeitscheibe in den Simulationen 110, 120, 130 überprüft die Monitoring-Komponente 118 eine entsprechende Ereignis-Variable im Prozess-Abbild 114 der PLC-Simulation 110 in einem Schritt (5.1). Das Ergebnis dieser Prüfung (Bedingung erfüllt/Bedingung nicht erfüllt) wird in einem Schritt (5.2) der Kontroll-Applikation 150 mitgeteilt. Stellt die Kontroll-Applikation 150 das Vorliegen eines bestimmten Ereignisses fest, so wird in einem weiteren Schritt (6) ein Stopp der Zeitscheibenverteilung an alle Komponenten 110, 120, 130 ausgegeben.

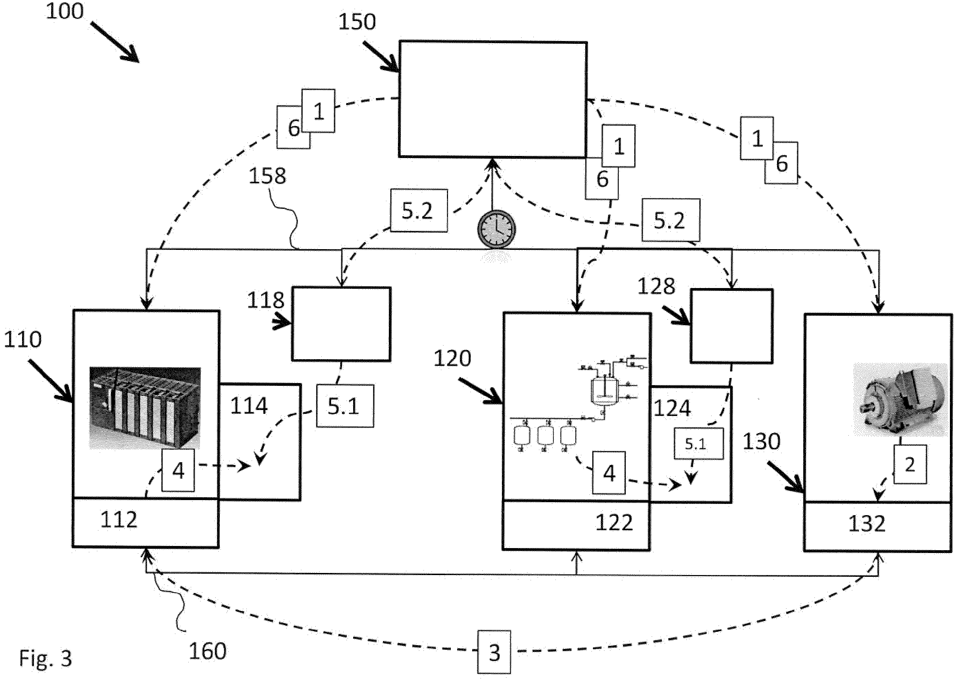

Figur 3 zeigt das Emulations-System 100 gemäß den Figuren 1 und 2, wobei nun auch die Prozess-Simulation 120 mit einem Prozess-Abbild 124 entsprechend des Prozess-Abbildes 114 der PLC-Simulation versehen ist. Weiterhin ist auch für das Prozess-Abbild 124 der Prozess-Simulation 120 eine Prozess-Monitoring-Applikation 128 entsprechend der Monitoring-Applikation 118 für die PLC-Simulation vorgesehen.

Figur 3 zeigt wiederum den in Figur 2 bereits dargestellten Prozessablauf bei der Überwachung des Emulations-Systems 100, wobei im Verfahrensschritt (4) nunmehr auch eine Prozess-Variable aus der Prozess-Simulation 120 in das Prozess-Abbild 124 der Prozess-Applikation 120 geschrieben wird. Im Verfahrensschritt (5.1) wird nunmehr bei dem erweiterten Verfahrensablauf neben dem Zugriff der Monitoring-Komponente 118 auf das Prozess-Abbild 114 der PLC-Simulation 110 auch das Prozess-Abbild 124 der Prozess-Simulation 120 durch die weitere Monitoring-Komponente 128 überprüft und ausgelesen, wobei im erweiterten Verfahrensschritt 5.2 auch aus der weiteren Monitoring-Komponente 128 ein Ergebnis (Bedingung erfüllt/Bedingung nicht erfüllt) an die Kontroll-Applikation 150 gesendet wird.

Die Monitoring-Applikation ist nun im in Figur 3 dargestellten Beispiel so eingerichtet, dass eine "Und"-Verknüpfung der Monitoring-Ergebnisse aus den beiden Monitoring-Applikationen 118, 128 erfolgt und im Falle, dass beide Bedingungen erfüllt sind, einen Stopp der Zeitscheibenverteilung im Verfahrensschritt (6) ausgelöst wird.

## Patentansprüche

1. Emulationssystem (100) zur Simulation eines technischen Systems,
wobei das technische System zwei zusammenwirkende technische Komponenten umfasst,
und das Emulationssystem (100)
eine erste Simulationsapplikation (110) zur Simulation einer ersten der technischen Komponenten und
eine zweite Simulationsapplikation (120, 130) zur Simulation einer zweiten der technischen Komponenten umfasst,
wobei die erste (110) und die zweite Simulationsapplikation (120, 130) jeweils eine Kommunikationsschnittstelle (112, 122, 132) zum Austausch von Nachrichten und/oder Informationen mit der jeweils anderen Simulationsapplikation aufweist, und
wobei das Emulationssystem (100) weiterhin eine Kontroll-applikation (150) umfasst, welche zur Koordination der ersten (110) und zweiten Simulationsapplikation (120, 130) ausgebildet und eingerichtet ist,
**dadurch gekennzeichnet,**
**dass** das Emulationssystem (100) weiterhin eine Monitoring-Applikation (118) umfasst,
wobei die Monitoring-Applikation (118) einen Zugriff auf Simulationsdaten der ersten Simulationsapplikation (110) hat sowie zum Prüfen einer Ereignis-Bedingung bezüglich der ersten Simulationsapplikation (110) ausgebildet und eingerichtet ist,
wobei die Monitoring-Applikation (118) weiterhin derart ausgebildet und eingerichtet ist, dass sie nur wenn die Ereignis-Bedingung erfüllt ist ein erstes Monitoring-Ergebnis an die Kontrollapplikation (150) übermittelt, und dass die Kontrollapplikation (150) weiterhin zur Auswertung des ersten Monitoring-Ergebnisses ausgebildet und eingerichtet ist.

2. Emulationssystem gemäß Anspruch 1,
**dadurch gekennzeichnet,**
**dass** die Monitoring-Applikation (118) oder eine weitere Monitoring-Applikation (128) des Emulationssystems (100) einen Zugriff auf Simulationsdaten der zweiten Simulationsapplikation (120, 130) hat und die Monitoring-Applikation (118) beziehungsweise die weitere Monitoring-Applikation (128) zur Übermittlung eines zweiten Monitoring-Ergebnisses an die Kontrollapplikation (150) ausgebildet und eingerichtet ist, wobei
die Kontrollapplikation (150) weiterhin zur Auswertung auch des zweiten Monitoring-Ergebnisses ausgebildet und eingerichtet ist.

3. Emulationssystem gemäß Anspruch 1 oder 2,
**dadurch gekennzeichnet,**
**dass** die Kontrollapplikation (150) im Rahmen der Auswertung des ersten und/oder des zweiten Monitoring-Ergebnisses zur Prüfung auf das Vorliegen eines Prüfzustands ausgebildet und eingerichtet ist.

4. Emulationssystem gemäß Anspruch 3,
**dadurch gekennzeichnet,**
**dass** die Kontrollapplikation (150) derart ausgebildet und eingerichtet ist, dass sie ein Anhalten der ersten (110) und zweiten Simulationsapplikation (120, 130) veranlasst, wenn die Auswertung des ersten und/oder des zweiten Monitoring-Ergebnisses das Vorliegen des Prüfzustands ergibt.

5. Verfahren zur Simulation eines zwei zusammenwirkende Komponenten umfassenden technischen Systems mit einem Emulationssystem (100) gemäß der Ansprüche 1 bis 4, umfassend die Schritte,
a) Ablauf der ersten (110) und zweiten Simulationsapplikation (120, 130) für einen vorgegebenen oder vorgebbaren Zeitraum,
b) Überwachen der ersten Simulationsapplikation (110) durch die Monitoring-Applikation (118),
b1) Prüfen einer Ereignis-Bedingung bezüglich der ersten Simulationsapplikation durch die Monitoring-Applikation (118)
c) Nur wenn die Ereignis-Bedingung erfüllt ist: Übermitteln eines ersten Monitoring-Ergebnisses bezüglich der Überwachung der ersten Simulationsapplikation (118) an die Kontrollapplikation (150),
d) Auswerten des ersten Monitoring-Ergebnisses durch die Kontrollapplikation (150).

6. Verfahren gemäß Anspruch 5,
**dadurch gekennzeichnet,**
**dass** in Verfahrensschritt b) die Monitoring-Applikation (118) oder eine weitere Monitoring-Applikation (128) auch die zweite Simulationsapplikation (120, 130) überwacht, dass in Verfahrensschritt c) auch zweite Monitoring-Ergebnisse bezüglich der Überwachung der zweiten Simulationsapplikation (120, 130) an die Kontrollapplikation (150) übermittelt werden, und
**dass** in Verfahrensschritt d) die Kontrollapplikation (150) das erste und/oder zweite Monitoring-Ergebnis auswertet.

7. Verfahren gemäß Anspruch 5 und/oder 6,
**dadurch gekennzeichnet,**
**dass** in Verfahrensschritt b1) die Monitoring-Applikation (118) oder die weitere Monitoring-Applikation (128) eine weitere Ereignis-Bedingung bezüglich der zweiten Simulationsapplikation (120, 130) prüft und die Übermittlung der zweiten Monitoring-Ergebnisse gemäß Verfahrensschritt c) nur erfolgt, wenn die weitere Ereignis-Bedingung erfüllt ist.

8. Verfahren gemäß einem der Ansprüche 5 bis 7,
**dadurch gekennzeichnet,**
**dass** die Auswertung gemäß Verfahrensschritt d) eine Prüfung auf das Vorliegen eines Prüfzustands umfasst.

9. Verfahren gemäß Anspruch 8,
**dadurch gekennzeichnet,**
**dass** die Kontrollapplikation (150) ein Anhalten der ersten und zweiten Simulationsapplikation veranlasst, wenn die Auswertung gemäß Verfahrensschritt d) das Vorliegen des Prüfzustands ergibt.

## Claims

1. Emulation system (100) for simulating a technical system, wherein the technical system comprises two interacting technical components,
and the emulation system (100) comprises
a first simulation application (110) for simulating a first of the technical components and
a second simulation application (120, 130) for simulating a second of the technical components,
wherein the first (110) and the second (120, 130) simulation application each have a communication interface (112, 122, 132) for exchanging messages and/or information with the respective other simulation application, and
wherein the emulation system (100) furthermore comprises a control application (150) designed and configured for coordinating the first (110) and second (120, 130) simulation applications,
**characterized**
**in that** the emulation system (100) furthermore comprises a monitoring application (118),
wherein the monitoring application (118) has access to simulation data of the first simulation application (110) and is designed and configured for testing an event condition concerning the first simulation application (110), wherein the monitoring application (118) is furthermore designed and configured such that it transmits a first monitoring result to the control application (150) only if the event condition is satisfied,
and **in that** the control application (150) is furthermore designed and configured for evaluating the first monitoring result.

2. Emulation system according to Claim 1,
**characterized**
**in that** the monitoring application (118) or a further monitoring application (128) of the emulation system (100) has access to simulation data of the second simulation application (120, 130), and the monitoring application (118) or the further monitoring application (128) is designed and configured for transmitting a second monitoring result to the control application (150), wherein the control application (150) is furthermore designed and configured for also evaluating the second monitoring result.

3. Emulation system according to Claim 1 or 2,
**characterized**
**in that** the control application (150) is designed and configured for testing for the presence of a test state when evaluating the first and/or the second monitoring result.

4. Emulation system according to Claim 3,
**characterized**
**in that** the control application (150) is designed and configured such that it prompts the first (110) and second (120, 130) simulation applications to stop if the result of the evaluation of the first and/or the second monitoring result is the presence of the test state.

5. Method for simulating a technical system comprising two interacting components using an emulation system (100) according to Claims 1 to 4, comprising the steps of
a) the first (110) and second (120, 130) simulation applications running for a prescribed or prescribeable period,
b) monitoring the first simulation application (110) by means of the monitoring application (118),
b1) testing an event condition concerning the first simulation application by means of the monitoring application (118),
c) only if the event condition is satisfied: transmitting a first monitoring result concerning the monitoring of the first simulation application (118) to the control application (150),
d) evaluating the first monitoring result by means of the control application (150).

6. Method according to Claim 5,
**characterized**
**in that** in method step b) the monitoring application (118) or a further monitoring application (128) also monitors the second simulation application (120, 130),
**in that** in method step c) second monitoring events concerning the monitoring of the second simulation application (120, 130) are also transmitted to the control application (150), and
**in that** in method step d) the control application (150) evaluates the first and/or second monitoring result.

7. Method according to Claim 5 and/or 6,
**characterized**
**in that** in method step b1) the monitoring application (118) or the further monitoring application (128) tests a further event condition concerning the second simulation application (120, 130), and the transmission of the second monitoring results according to method step c) takes place only if the further event condition is satisfied.

8. Method according to one of Claims 5 to 7,
**characterized**
**in that** the evaluation according to method step d) comprises a test for the presence of a test state.

9. Method according to Claim 8,
**characterized**
**in that** the control application (150) prompts the first and second simulation applications to stop if the result of the evaluation according to method step d) is the presence of the test state.

## Revendications

1. Système d'émulation (100) pour la simulation d'un système technique,
ce système technique comprenant deux composants techniques concourants,
et ce système d'émulation (100)
comprenant une première application de simulation (110) pour la simulation d'un premier des composants techniques et une deuxième application de simulation (120, 130) pour la simulation d'un deuxième des composants techniques,
cette première (110) et cette deuxième application de simulation (120, 130) comportant chacune une interface de communication (112, 122, 132) pour l'échange de messages et/ou d'informations avec l'autre application de simulation respective, et
ce système d'émulation (100) comprenant en outre une application de contrôle (150), laquelle est réalisée et prévue pour la coordination de la première (110) et de la deuxième application de simulation (120, 130),
**caractérisé en ce que**
le système d'émulation (100) comprend en outre une application de monitoring (118),
cette application de monitoring (118) ayant un accès aux données de simulation de la première application de simulation (110) et étant réalisée et prévue pour tester une condition d'événement relative à la première application de simulation (110),
cette application de monitoring (118) étant en outre réalisée et prévue de telle sorte qu'elle ne transmet un premier résultat de monitoring à l'application de contrôle (150) que quand cette condition d'événement est remplie,
et **en ce que** l'application de contrôle (150) est réalisée et prévue en outre pour l'évaluation du premier résultat de monitoring.

2. Système d'émulation selon la revendication 1,
**caractérisé en ce que**
l'application de monitoring (118) ou une autre application de monitoring (128) du système d'émulation (100) a un accès aux données de simulation de la deuxième application de simulation (120, 130) et l'application de monitoring (118) respectivement, selon le cas, l'autre application de monitoring (128) est réalisée et prévue pour la transmission d'un deuxième résultat de monitoring à l'application de contrôle (150),
cette application de contrôle (150) étant réalisée et prévue en outre pour l'évaluation également du deuxième résultat de monitoring.

3. Système d'émulation selon la revendication 1 ou 2, **caractérisé en ce que**
l'application de contrôle (150) est réalisée et prévue dans le cadre de l'évaluation du premier et/ou du deuxième résultat de monitoring pour tester la présence d'un état de test.

4. Système d'émulation selon la revendication 3,
**caractérisé en ce que**
l'application de contrôle (150) est réalisée et prévue de telle sorte qu'elle donne lieu à un arrêt de la première (110) et de la deuxième application de simulation (120, 130) quand l'évaluation du premier et/ou du deuxième résultat de monitoring constate la présence de l'état de test.

5. Procédé de simulation d'un système technique comprenant deux composants concourants avec un système d'émulation (100) selon les revendications 1 à 4, comprenant les étapes suivantes:
a) écoulement de la première (110) et de la deuxième application de simulation (120, 130) pendant une durée prédéfinie ou prédéfinissable,
b) surveillance de la première application de simulation (110) par l'application de monitoring (118),
b1) test d'une condition d'événement relative à la première application de simulation par l'application de monitoring (118)
c) seulement quand la condition d'événement est remplie: transmission d'un première résultat de monitoring relatif à la surveillance de la première application de simulation (118) à l'application de contrôle (150),
d) évaluation du premier résultat de monitoring par l'application de contrôle (150).

6. Procédé selon la revendication 5,
**caractérisé en ce que**
à l'étape de procédé b) l'application de monitoring (118), ou une autre application de monitoring (128), surveille également la deuxième application de simulation (120, 130),
**en ce qu'**à l'étape de procédé c), également les deuxièmes résultats de monitoring, relatifs à la surveillance de la deuxième application de simulation (120, 130), sont transmis à l'application de contrôle (150), et
à l'étape de procédé d), l'application de contrôle (150) évalue le premier et/ou le deuxième résultat de monitoring.

7. Procédé selon la revendication 5 et/ou 6,
**caractérisé en ce que**
à l'étape b1), l'application de monitoring (118) ou l'autre application de monitoring (128) teste une autre condition d'événement relative à la deuxième application de simulation (120, 130) et la transmission des deuxièmes résultats de monitoring selon l'étape de procédé c) ne s'effectue que quand l'autre condition d'événement est remplie.

8. Procédé selon l'une des revendications 5 à 7,
**caractérisé en ce que**,
l'évaluation selon l'étape de procédé d) comprend un test de présence d'un état de test.

9. Procédé selon la revendication 8,
**caractérisé en ce que**
l'application de contrôle (150) donne lieu à un arrêt de la première et de la deuxième application de simulation quand l'évaluation selon l'étape de procédé d) constate la présence de l'état de test.
